# EUROPEAN PATENT SPECIFICATION

(11) **EP 4 094 913 B1**
(45) Date of publication and mention of the grant of the patent: **10.01.2024**
(21) Application number: 22170699.7
(22) Date of filing: 29.04.2022
(51) Int. Cl.: B28B 7/00, B28B 17/00, B25J 9/02

(54) **ARRANGEMENT FOR MOLD FORMATION IN CONCRETE ELEMENT MANUFACTURING**
ANORDNUNG ZUR FORMGEBUNG BEIM HERSTELLEN VON BETONELEMENTEN
AGENCEMENT DE FORMATION D'UN MOULE POUR LA FABRICATION D'UN ÉLÉMENT EN BÉTON

(30) Priority: 26.05.2021 FI 20215618
(43) Date of publication of application: 30.11.2022
(73) Proprietor: Elematic Oyj, 37801 Akaa (FI)
(72) Inventor: SIRKKA, Jouni, 37550 Lempäälä (FI)
(74) Representative: Berggren Oy

(56) References cited:
- EP-A1- 1 273 407
- AT-A1- 508 324
- DE-C1- 19 651 933
- Avermann Maschinenfabrik: "AVERMANN Palettenumlaufanlage mit Schalungsroboter - Pallet circulation system with shuttering robot", , 12 October 2012 (2012-10-12), XP055970379, Retrieved from the Internet: URL:https://www.youtube.com/watch?v=njzfuY lpfOk [retrieved on 2022-10-12]

## Description

The present invention relates to manufacturing of prefabricated concrete elements with mold casting. More precisely the invention relates to forming mold or molds on a casting bed with a furnishing robot during the manufacturing of prefabricated concrete elements.

In high-automized concrete manufacturing plants concrete wall elements are typically cast on a pallets or casting tables moved through a plurality of workstations along a conveyer line. This type of casting process is called a circulating line casting process, wherein the different steps of the casting process are done at consecutive workstations and the mold is conveyed through these workstations.

One of the first steps of mold casting is the formation of mold, which is done in circulating line casting on mold tables with fixed and detachable mold side form units. Detachable side form units are typically fixed on the metal surface of the mold table with magnets.

Furnishing robots are presently used more frequently in furnishing horizontal casting mold tables of prefabricated concrete elements and products. In the mold formation step said furnishing robots generally fetch the detachable side form units from storage and set them on predetermined spots on the casting table. After setting each detachable side form unit in place, the furnishing robot locks the side form unit in its place by activating the fastening magnets fixing the side form unit, either some of said magnets or all at the same time. Typically detachable side form units to be set in place by furnishing robots are provided with fastening magnet units located inside the side form units, said fastening magnet units being operated through the top surface of the side form unit, typically by intermediation of a control pin extending upwardly from the top surface.

In typical circulating line process there are simultaneously several pallets or mold tables moving through the consecutive work stations. Thus, the required amount of detachable side form units is large. Further, the different concrete elements to be cast also varies in sizes, types and forms, so the there is large variety of detachable side form elements needed for mold formation. Therefore the storage area for the detachable mold side form units accessible for the furnishing robot can became very large, which typically lowers the furnishing robot's efficiency in the mold formation since the time for retrieving a new sidewall unit to be placed and fixed on mold table increases.

The present invention provides a solution for effective and efficient handling of the large amount of different detachable side form units needed with a furnishing robot in mold formation.

In the present invention at least part, preferably whole, of the storage of the detachable side form units in an operating area of a furnishing robot is movable to and from the operating area of the furnishing robot. This allows different configurations of stored side form units to be quickly changed for the furnishing robot when the element types to be cast change, for example. Further, the present invention also allows for smaller area for the storage of the detachable side form units within the operating area of the furnishing robot, which also increases the efficiency of the furnishing robot.

An arrangement of the present invention for mold formation in concrete element manufacturing comprises a furnishing robot with predefined operating area for placing detachable side form units on a horizontal casting surface, at least one pallet comprising the said horizontal casting surface, which pallet is movable to and from the operating area of the furnishing robot, and a storage area for storage of detachable side form units, which storage area is located inside the operating area of the furnishing robot for retrieving detachable side form units from the storage on the storage area and placing them on the horizontal casting surface by the furnishing robot, wherein at least part of the said storage of detachable side form units is formed on a movable storage pallet, which movable storage pallet is movable to and from the storage area inside the operating area of the furnishing robot.

In the present invention the movable storage pallets can be moved in any suitable way, such as along rails and/or suitable guides with suitable drive means for example, known to a person skilled in the art.

In an embodiment of the arrangement of the invention the whole storage of the detachable side form units inside the operating area of the furnishing robot is formed on the movable storage pallet, which movable storage pallet covers the storage area inside the operating area of the furnishing robot. This embodiment allows for quick changing or replacing of the whole storage of the detachable side form units on the operating area of the furnishing robot.

Publication EP 1 273 407 A1 discloses an arrangement for mold formation in concrete element manufacturing in accordance with the preamble of claim 1, in particular it discloses a magnet setting robot, wherein the magnets to be set on a casting bed with the robot are brought inside the operating area of the robot via roller tracks.

Publications AT 508 324 A1 and DE 196 51 933 C1 disclose circulating line casting processes of concrete elements, wherein the used and cleaned side form units are returned inside the operating area of a furnishing robot with suitable conveyors.

In an alternative embodiment the storage of detachable side form units inside the operating area of the furnishing robot is divided on a plurality of movable storage pallets, each of the movable storage pallets covering a portion of the storage area inside the operating area of the furnishing robot. This embodiment allows changing of the storage of the detachable side form units in phases or quick continuous replacement of the side form units to the furnishing robot. In this embodiment each of the plurality of movable storage pallets are preferably individually movable to and from the storage area inside the operating area of the furnishing robot.

In an embodiment of the arrangement of the present invention the arrangement comprises more movable storage pallets than is required to cover the storage area inside the operating area of the furnishing robot. In this embodiment the movable storage pallets on the storage area inside the operating area of the furnishing robot are preferably changed based on information defining the concrete element to be cast.

In an embodiment of the arrangement of the invention with a plurality of movable storage pallets each of the movable storage pallets preferably comprises a different set of detachable side form units. This way the change to different side form units can be implemented quickly when the type of concrete element to be cast changes, for example.

In an embodiment of the arrangement of the invention the furnishing robot is configured to fix the detachable side form units on the horizontal casting surface by operating fastening magnets in the detachable side form units.

In an embodiment of the arrangement of the invention the furnishing robot is a cartesian robot with a gripping unit.

In an embodiment of the arrangement of the invention the arrangement is a part of a circulation line casting process of concrete elements.

In an embodiment of the arrangement of the invention the arrangement comprises devices for conveying cleaned side form units to the operating area of the furnishing robot. In this embodiment some of the pallets forming the storage of the detachable side form units can be quickly brough to the operating area of the furnishing robot for filling with the returned cleaned side form units from the casting process during change of the casting pallets in the operating area of the furnishing robot, and then quickly moved out. Alternatively, the cleaned side form units returned from the casting process can be conveyed directly to storage without taking them into the operating area of the furnishing robot, especially in the cases where the returned side form units are different than ones required by the furnishing robot at that time.

More precisely the features defining an arrangement in accordance with the present invention are presented in claim 1. Dependent claims present advantageous features and embodiments of the invention.

Exemplifying embodiments of the invention and their advantages are explained in greater detail below in the sense of example and with reference to accompanying drawings, where
Figure 1 shows schematically an embodiment of the arrangement of the invention, and
Figure 2 shows schematically an alternative embodiment of the arrangement of the invention.

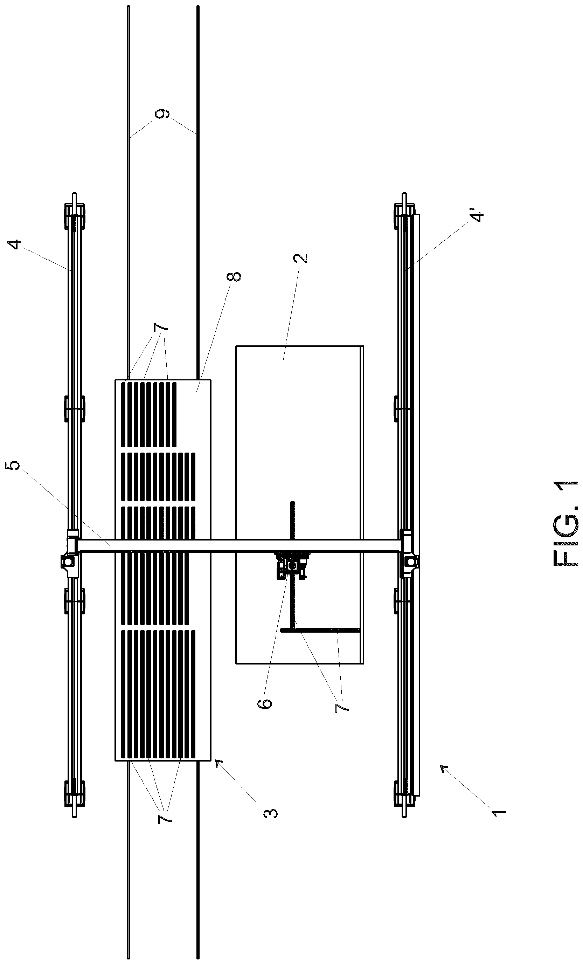

The embodiment of the arrangement of the invention shown in figure 1 comprises a furnishing robot 1, a mold table 2 and a detachable side form unit storage 3.

The furnishing robot 1 is in this embodiment a cartesian type robot, with two parallel elevated rails 4, 4' at a distance from each other, and a cross beam 5 connecting the rails and which cross beam is connected to the rails movably along the rails with suitable precision drive means. To the cross beam 5 is connected movably along the beam a robot manipulator 6 with a vertically movable gripping unit (not shown). With cartesian type robot, the operating area of the robot is effective restricted within area between the rails 4, 4'.

When the mold table 2 is furnished, the furnishing robot 1 retrieves detachable side form units 7 from the side form unit storage 3, one by one, and places those on the mold table at predefined places to form a casting mold for the concrete product to be cast. The gripping unit of the robot 1 can also be equipped with a suitable actuator to also activate the fastening magnet(s) inside the side form unit 7 to fix the side form unit to the mold table 2 after the placement of the side form unit, or alternatively the fixing of the side form units via fastening magnets can be done after all side form units required for forming the casting mold are placed on the casting table manually, for example.

Since the detachable side form unit storage 3 must be located inside the operating area of the furnishing robot 1, it must be optimized in size, since the larger the operating area of the furnishing robot is, the slower the furnishing robot will be in its furnishing operation. Thus, the size of the detachable side for unit storage 3 directly affects the efficiency of the furnishing robot 1.

In the embodiment shown in figure 1 the detachable side form unit storage 3 is formed on a movable pallet 8, which movable pallet comprises a plurality of stacks of detachable side form units 7. The movable pallet 8 is movable to and from the operating area of the furnishing robot 1 via rails or guides 9. This way the detachable side form unit storage 3 can be easily and quickly be replaced with another for replacing the detachable side form units to different ones for different kind of concrete element to be cast or replenishing the storage of the presently used detachable side form units for similar concrete elements to be cast.

After the mold table 2 is furnished, i.e. the mold is formed on the mold table with the detachable side form units 7 by the furnishing robot 1, the mold table is moved from the operating area of the furnishing robot to further steps in the casting process, and a new mold table is moved to the operating area for furnishing.

During the furnishing of the mold table 2 cleaned detachable side form units from previously made molds are typically, especially in a circulating line casting process, returned with conveyers to the operating area of the furnishing robot 1 to a specific intermediate storage area (not shown). The furnishing robot 1 picks the cleaned detachable side form units 7 from the intermediate storage area and uses these in the mold formation during the furnishing stage, or places these in the detachable side form unit storage 3 between the furnishing stages.

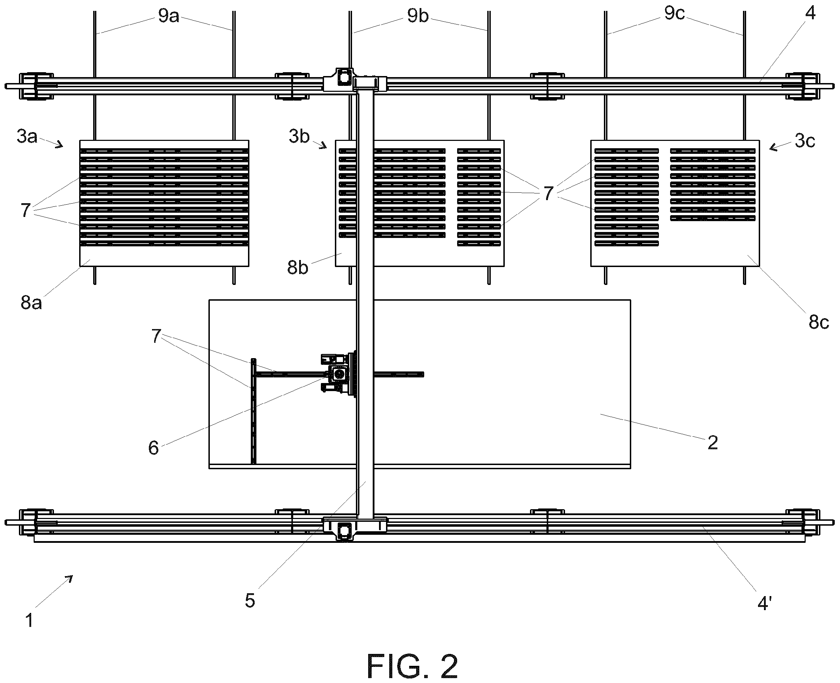

Figure 2 shows an alternative embodiment of the invention, which otherwise corresponds to the embodiment of figure 1 with the exception that the detachable side form storage is divided to three separate sections 3a, 3b and 3c, each of which is formed on its own movable pallet 8a, 8b and 8c. Each of the movable pallets 8a-8c are individually movable along their own rails or guides 9a-9c with suitable drive devices.

In this embodiment each of the separate storage sections 3a-3b can be individually moved to and from the operating area of the furnishing robot 1, so that the detachable side form unit storage can be replaced or replenished gradually one storage section at a time. This embodiment also allows at least one of the storage sections 3a-3c to be used for storing the cleaned side form units 7 returned from the casting process to the operating area of the furnishing robot 1.

The specific exemplifying embodiments of the invention shown in figures and discussed above should not be construed as limiting. A person skilled in the art can amend and modify the embodiments described in many evident ways within the scope of the attached claims. Thus, the invention is not limited merely to the embodiments described above.

## Claims

1. Arrangement for mold formation in concrete element manufacturing, which arrangement comprises a furnishing robot (1) with predefined operating area for placing detachable side form units (7) on a horizontal casting surface, at least one pallet (2) comprising the said horizontal casting surface, which pallet is movable to and from the operating area of the furnishing robot, and a storage area (3; 3a, 3b, 3c) for storage of detachable side form units, which storage area is located inside the operating area of the furnishing robot for retrieving detachable side form units from the storage on the storage area and placing them on the horizontal casting surface by the furnishing robot, **characterized in that** at least part of the said storage (3; 3a, 3b, 3c) of detachable side form units (7) is formed on a movable storage pallet (8; 8a, 8b, 8c), which movable storage pallet is movable to and from the storage area inside the operating area of the furnishing robot (1).

2. Arrangement according to claim 1, wherein the whole storage (3) of the detachable side form units (7) inside the operating area of the furnishing robot (1) is formed on the movable storage pallet (8), which movable storage pallet covers the storage area inside the operating area of the furnishing robot.

3. Arrangement according to claim 1, wherein the storage (3a, 3b, 3c) of detachable side form units (7) inside the operating area of the furnishing robot (1) is divided on a plurality of movable storage pallets (8a, 8b, 8c), each of the movable storage pallets covering a portion of the storage area inside the operating area of the furnishing robot.

4. Arrangement according to claim 3, wherein each of the plurality of movable storage pallets (8a, 8b, 8c) are individually movable to and from the storage area (3a, 3b, 3c) inside the operating area of the furnishing robot (1).

5. Arrangement according to any of claims 1-4, wherein the arrangement comprises more movable storage pallets (8; 8a, 8b, 8c) than is required to cover the storage area (3; 3a, 3b, 3c) inside the operating area of the furnishing robot (1).

6. Arrangement according to claim 5, wherein the movable storage pallets (8; 8a, 8b, 8c) on the storage area (3; 3a, 3b, 3c) inside the operating area of the furnishing robot (1) are configured to be changed based on information defining the concrete element to be cast.

7. Arrangement according to claim 5 or 6, wherein each of the movable storage pallets (8; 8a, 8b, 8c) comprises a different set of detachable side form units (7).

8. Arrangement according to any of claims 1-7, wherein the furnishing robot (1) is configured to fix the detachable side form units (7) on the horizontal casting surface by operating fastening magnets in the detachable side form units.

9. Arrangement according to any of claims 1-8, wherein the furnishing robot (1) is a cartesian robot with a gripping unit.

10. Arrangement according to any of claims 1-9, wherein the arrangement is a part of a circulation line casting process of concrete elements.

11. Arrangement according to any of claims 1-10, wherein the arrangement comprises devices for conveying cleaned side form units (7) to the operating area of the furnishing robot (1).

## Patentansprüche

1. Anordnung zur Formgestaltung bei der Herstellung von Betonelementen, die einen Rüstroboter (1) mit vordefiniertem Arbeitsbereich zum Aufsetzen von abnehmbaren Seitenformeinheiten (7) auf eine horizontale Gussfläche und mindestens eine die horizontale Gussfläche enthaltende Palette (2) umfasst, wobei diese Palette zum Arbeitsbereich des Rüstroboters hin und von ihm weg bewegt werden kann, und einen Speicherbereich (3; 3a, 3b, 3c) zum Speichern von abnehmbaren Seitenformeinheiten, wobei der Speicherbereich sich innerhalb des Arbeitsbereichs des Rüstroboters befindet, um abnehmbare Seitenformeinheiten aus der Speicherung im Speicherbereich zurückzuholen und sie auf der horizontalen Gussfläche mit dem Rüstroboter aufzusetzen, **dadurch gekennzeichnet, dass** mindestens ein Teil der Speicherung (3; 3a, 3b, 3c) von abnehmbaren Seitenformeinheiten (7) auf einer beweglichen Speicherpalette (8; 8a, 8b, 8c) geformt wird, wobei diese bewegliche Speicherpalette zum Speicherbereich innerhalb des Arbeitsbereichs des Rüstroboters (1) hin und von ihm weg bewegt werden kann.

2. Anordnung nach Anspruch 1, wobei die gesamte Speicherung (3) der abnehmbaren Seitenformeinheiten (7) innerhalb des Arbeitsbereichs des Rüstroboters (1) auf der beweglichen Speicherpalette (8) geformt wird, wobei diese bewegliche Speicherpalette den Speicherbereich innerhalb des Arbeitsbereichs des Rüstroboters bedeckt.

3. Anordnung nach Anspruch 1, wobei die Speicherung (3a, 3b, 3c) von abnehmbaren Seitenformeinheiten (7) innerhalb des Arbeitsbereichs des Rüstroboters (1) in eine Vielzahl von beweglichen Speicherpaletten (8a, 8b, 8c) unterteilt ist, wobei jede der beweglichen Speicherpaletten einen Teil des Speicherbereichs innerhalb des Arbeitsbereichs des Rüstroboters bedeckt.

4. Anordnung nach Anspruch 3, wobei jede der Vielzahl von beweglichen Speicherpaletten (8a, 8b, 8c) individuell zum Speicherbereich (3a, 3b, 3c) innerhalb des Arbeitsbereichs des Rüstroboters (1) und von ihm weg bewegt werden kann.

5. Anordnung nach einem der Ansprüche 1 - 4, wobei die Anordnung mehr bewegliche Speicherpaletten (8; 8a, 8b, 8c) umfasst als notwendig sind, um den Speicherbereich (3; 3a, 3b, 3c) innerhalb des Arbeitsbereichs des Rüstroboters (1) zu bedecken.

6. Anordnung nach Anspruch 5, wobei die beweglichen Speicherpaletten (8; 8a, 8b, 8c), im Speicherbereich (3; 3a, 3b, 3c) innerhalb des Arbeitsbereichs des Rüstroboters (1) so konfiguriert sind, dass sie auf Grundlage von Information, die das zu gießende Betonelement definiert, geändert werden.

7. Anordnung nach Anspruch 5 oder 6, wobei jede der beweglichen Speicherpaletten (8; 8a, 8b, 8c) einen anderen Satz von abnehmbaren Seitenformeinheiten (7) umfasst.

8. Anordnung nach einem der Ansprüche 1 - 7, wobei der Rüstroboter (1) so konfiguriert ist, dass er die abnehmbaren Seitenformeinheiten (7) auf der horizontalen Gussfläche befestigt, indem er Befestigungsmagnete in den abnehmbaren Seitenformeinheiten betätigt.

9. Anordnung nach einem der Ansprüche 1 - 8, wobei der Rüstroboter (1) ein kartesischer Roboter mit einer Greifeinheit ist.

10. Anordnung nach einem der Ansprüche 1 - 9, wobei die Anordnung Teil eines Gießprozesses mit Umlaufbahn für Betonelemente ist.

11. Anordnung nach einem der Ansprüche 1 - 10, wobei die Anordnung Vorrichtungen für den Transport von gereinigten Seitenformeinheiten (7) zum Arbeitsbereich des Rüstroboters (1) umfasst.

## Revendications

1. Dispositif destiné à la formation de moule dans la fabrication d'éléments en béton, lequel dispositif comprend un robot d'ameublement (1) avec une zone de fonctionnement prédéfinie permettant de placer des unités de forme latérale détachables (7) sur une surface de coulée horizontale, au moins une palette (2) comprenant ladite surface de coulée horizontale, laquelle palette est mobile vers et depuis la zone de fonctionnement du robot d'ameublement, et une zone de stockage (3 ; 3a, 3b, 3c) destinée au stockage des unités de forme latérale détachables, laquelle zone de stockage est située à l'intérieur de la zone de travail du robot d'ameublement pour récupérer les unités de forme latérale détachables du stockage sur la zone de stockage et les placer sur la surface de coulée horizontale par le robot d'ameublement, **caractérisée en ce qu'**au moins une partie de ladite zone de stockage (3 ; 3a, 3b, 3c) d'unités de forme latérale détachables (7) est formée sur une palette de stockage mobile (8 ; 8a, 8b, 8c), laquelle palette de stockage mobile est déplacée vers et depuis la zone de stockage à l'intérieur de la zone de fonctionnement du robot d'ameublement (1).

2. Dispositif selon la revendication 1, dans lequel l'ensemble du stockage (3) des unités de forme latérales détachables (7) à l'intérieur de la zone de fonctionnement du robot d'ameublement (1) est formé sur la palette de stockage mobile (8), laquelle palette de stockage mobile couvre la zone de stockage à l'intérieur de la zone de fonctionnement du robot d'ameublement.

3. Dispositif selon la revendication 1, dans lequel le stockage (3a, 3b, 3c) des unités de forme latérales détachables (7) situées à l'intérieur de la zone de fonctionnement du robot d'ameublement (1) est réparti sur une pluralité de palettes de stockage mobiles (8a, 8b, 8c), chacune des palettes de stockage mobiles couvrant une partie de la zone de stockage située à l'intérieur de la zone de fonctionnement du robot d'ameublement.

4. Dispositif selon la revendication 3, dans lequel chacune des palettes de stockage mobiles (8a, 8b, 8c) peut être déplacée individuellement vers et depuis la zone de stockage (3a, 3b, 3c) à l'intérieur de la zone de fonctionnement du robot d'ameublement (1).

5. Dispositif selon l'une quelconque des revendications 1 à 4, dans lequel le dispositif comprend plus de palettes de stockage mobiles (8 ; 8a, 8b, 8c) que nécessaire pour couvrir la zone de stockage (3 ; 3a, 3b, 3c) à l'intérieur de la zone de fonctionnement du robot d'ameublement (1).

6. Dispositif selon la revendication 5, dans lequel les palettes de stockage mobiles (8 ; 8a, 8b, 8c) sur la zone de stockage (3 ; 3a, 3b, 3c) à l'intérieur de la zone de fonctionnement du robot d'ameublement (1) sont configurées pour être modifiées sur la base d'informations définissant l'élément en béton à couler.

7. Dispositif selon la revendication 5 ou la revendication 6, dans lequel chacune des palettes de stockage mobiles (8 ; 8a, 8b, 8c) comprend un ensemble différent d'unités de forme latérales mobiles (7).

8. Dispositif selon l'une quelconque des revendications 1 à 7, dans lequel le robot d'ameublement (1) est configuré pour fixer les unités de forme latérales mobiles (7) sur la surface de coulée horizontale en actionnant des aimants de fixation dans les unités de forme latérales mobiles.

9. Dispositif selon l'une quelconque des revendications 1 à 8, dans lequel le robot d'ameublement (1) est un robot cartésien doté d'une unité de préhension.

10. Dispositif selon l'une quelconque des revendications 1 à 9, dans lequel le dispositif fait partie d'un processus de coulée d'éléments en béton sur une ligne de circulation.

11. Dispositif selon l'une quelconque des revendications 1 à 10, dans lequel le dispositif comprend des dispositifs de transport des unités de coffrage latéral nettoyées (7) vers la zone de fonctionnement du robot de mise en place (1).
